# FASCICULE DE BREVET EUROPEEN

(11) **EP 2 673 782 B1**
(45) Date de publication et mention de la délivrance du brevet: **11.03.2015**
(21) Numéro de dépôt: 12702853.8
(22) Date de dépôt: 10.02.2012
(51) Int. Cl.: G21C 9/06, G21C 19/317, B01J 20/06, C01B 3/00, B01J 20/02, B01D 53/04, B01D 53/22, B01D 53/46, B01D 53/62, C01B 3/50, B01D 53/68

(54) **DISPOSITIF DE PIEGEAGE DE GAZ INFLAMMABLES PRODUITS PAR RADIOLYSE OU THERMOLYSE DANS UNE ENCEINTE DE CONFINEMENT**
VORRICHTUNG ZUM EINFANGEN VON BRENNBAREN GASEN HERGESTELLT DURCH RADIOLYSE ODER THERMOLYSE IN EINEM SICHERHEITSBEHÄLTER
DEVICE FOR TRAPPING FLAMMABLE GASES PRODUCED BY RADIOLYSIS OR THERMOLYSIS IN A CONTAINMENT

(30) Priorité: 11.02.2011 FR 1151136
(43) Date de publication de la demande: 18.12.2013
(73) Titulaire: TN International, 78180 Montigny Le Bretonneux (FR)
(72) Inventeur: ROHR, Valentin, 50470 Tollevast (FR); LEONI, Elisa, F-75013 Paris (FR); PRIGENT, Jocelyn, F-75013 Paris (FR); LATROCHE, Michel, F-78210 Saint-Cyr l'Ecole (FR)
(74) Mandataire: Ilgart, Jean-Christophe
(86) Numéro de dépôt international: PCT/EP2012/052342
(87) Numéro de publication internationale: WO 2012/107576

(56) Documents cités:
- EP-A1- 0 383 153
- EP-A1- 0 670 575
- US-A1- 2001 045 364
- US-A1- 2007 205 111

## Description

### DOMAINE TECHNIQUE

Le sujet de l'invention est un dispositif de piégeage de gaz inflammables produits par radiolyse ou thermolyse, ou les deux, dans une enceinte de confinement formée dans un emballage ou un autre système destiné au transport et/ou l'entreposage de matières radioactives. Un tel gaz, couramment produit par ces phénomènes, est l'hydrogène.

Les installations nucléaires donnent naissance à une certaine quantité de « déchets technologiques » qui peuvent comprendre des objets et des matériaux de natures très diverses tels que des filtres, des déchets métalliques, des gravats, des verres, etc., ou encore des matières organiques à base de cellulose comme du papier, du bois, du coton, ou de matières plastiques telles que des housses de conditionnement en vinyle ou en polyuréthane, des bottes, des gants et des objets divers en matière dite polymère. Tous ces déchets peuvent également enfermer de petites quantités de liquides tels que de l'eau et des liquides organiques comme l'huile ou des hydrocarbures. Ils constituent tous des matières, soit activées pendant leur séjour dans les installations nucléaires, soit contaminées par de la poudre de radioéléments dont l'uranium ou le plutonium lors de leur utilisation dans ces installations, ces radioéléments pouvant émettre des particules α, β, γ...

Le transport et le stockage de ces déchets technologiques posent une difficulté spécifique liée à la nature des matières transportées. En effet, comme précédemment écrit, ces déchets sont contaminés par des radioéléments dont l'uranium ou le plutonium qui leur confère un caractère radioactif. Sous l'effet de l'irradiation générée par les radioéléments, les matériaux constituant les déchets peuvent se dégrader et libérer des composés gazeux dont certains sont inflammables. Parmi les gaz produits on trouve de l'hydrogène, du monoxyde et du dioxyde de carbone, de l'oxygène, de l'azote ainsi que des composés organiques volatils (COV). Ce phénomène est appelé radiolyse. La production de tels gaz inflammables pose problème lorsque les déchets technologiques sont confinés dans une enceinte fermée de volume réduit, puisqu'ils peuvent atteindre rapidement une concentration élevée sans possibilité d'évacuation. Dans le cas de l'hydrogène, le seuil d'inflammabilité dans l'air est situé autour de 4%. Lorsque la concentration dépasse ce seuil, une source de chaleur ou une étincelle peut suffire à enflammer le mélange gazeux ou à produire une déflagration violente.

Diverses études et observations ont montré que la concentration des gaz inflammables, tels que l'hydrogène produit par radiolyse dans une enceinte fermée contenant des matières radioactives à composants hydrogénés, peut parfois atteindre des valeurs d'environ 4% au bout de quelques jours, comme lorsque les déchets technologiques émettent des particules α intenses et contiennent de nombreuses molécules organiques.

L'état de la technique antérieure comprend divers dispositifs de piégeage de gaz inflammables tels que l'hydrogène, notamment par une oxydation catalytique qui produit une recombinaison de l'oxygène et de l'hydrogène en eau.

Le brevet FR-A-2 874 120 décrit l'utilisation dans une enceinte fermée d'un tel catalyseur, auquel on a adjoint un second catalyseur suscitant une autre réaction d'oxydation de CO en CO2, puisque le CO est un poison de la réaction d'oxydation de l'hydrogène. Le premier catalyseur se présente avantageusement sous forme d'alumine imprégnée de palladium et le second catalyseur sous forme d'un mélange comprenant du CuO et du MnO2.

L'inconvénient de ces recombineurs par oxydation est qu'ils fonctionnent seulement si le ciel gazeux contient de l'oxygène en quantité suffisante, ce qui n'est pas toujours vrai, puisque la radiolyse des matières organiques (chaînes carbonées notamment) ne produit pas d'oxygène, et au contraire l'oxygène présent peut être consommé par des réactions d'oxydation de la matière organique.

Le brevet FR-A-2 925 752 décrit un dispositif permettant une libération contrôlée d'oxygène dans une enceinte fermée pour résoudre cette difficulté ; mais cette solution reste difficile à fiabiliser.

D'autres piégeurs comprennent des hydrures métalliques ou des oxydes métalliques, appelés moyens actifs ou « getters » qui piègent les gaz inflammables sans utiliser d'oxygène. Ces moyens actifs peuvent être réversibles (cas des hydrures métalliques) ou irréversibles (cas des oxydes métalliques). Dans le premier cas, le gaz inflammable peut être relâché dans des conditions de pression de températures spécifiques. Un inconvénient de ces moyens actifs est toutefois que leur efficacité est fortement réduite en présence de gaz poisons, et notamment, de nouveau, de CO. Or, la dégradation thermochimique et radiolytique des déchets polymériques engendre dans presque tous les cas des concentrations importantes de tels poisons.

Les documents US-A-6 262 328 et WO-A-2010/066811 décrivent en conséquence des moyens actifs enrobés dans des matrices poreuses qui ont la faculté de filtrer le mélange en arrêtant les poisons tout en permettant au gaz à piéger d'atteindre les moyens actifs. De telles matrices peuvent être des matrices vitreuses, cimentaires, ou des zéolites perméables à l'hydrogène. Un certain manque d'efficacité doit toutefois être regretté, puisqu'il est difficile d'optimiser la répartition des moyens actifs dans la matrice pour permettre un piégeage efficace : des quantités importantes de produit actif sont donc nécessaires. De plus, si le produit actif ne donne plus satisfaction, notamment s'il est saturé, il est impossible de le remplacer seul, la matrice devant l'être aussi.

Il existe encore des dispositifs de filtration fondés sur des membranes microporeuses ou autres, mais qui ne concernent pas les conditions de l'invention puisqu'ils ne concernent pas des enceintes confinées et reposent sur l'établissement de courants gazeux ou de différences de pression pour forcer un écoulement à travers les membranes. On citera par exemple le document EP-A-0 383 153, où un produit catalyseur est disposé à travers une ouverture de l'enveloppe dans laquelle l'hydrogène est produit : le catalyseur est enfermé dans un boîtier, muni d'une grille à la sortie et d'un filtre en chandelle, qui est cependant perméable à tous les gaz du mélange du côté de l'enveloppe ; les gaz en surpression dans l'enveloppe traversent donc le filtre et le catalyseur avant de s'écouler à l'extérieur, l'hydrogène ayant été éliminé, ici encore par recombinaison pour produire de l'eau.

Le document EP-A-0 670 575 décrit un autre dispositif où le catalyseur est déposé à l'intérieur d'un boîtier, qui est clos sauf à un filtre. Ce dispositif ne résout toutefois pas le problème de l'empoisonnement du catalyseur, de sorte qu'il doit rester isolé du milieu de production des gaz jusqu'à ce qu'une irruption d'hydrogène soit constatée. Il est alors exposé à ce milieu. La nécessité d'une surveillance et d'une manipulation du piège ou d'un mécanisme quand le piège doit devenir actif est un gros inconvénient pour des procédés de très longue durée où l'apparition de l'hydrogène peut être imprévisible, ou au contraire lente et régulière, ce qui imposerait de laisser le piège toujours actif pour éviter son accumulation. Il apparaît que le filtre n'exerce aucun effet sélectif sur les gaz et est un simple filtre à particules (HEPA). Il est douteux qu'une bonne efficacité puisse être obtenue si le piège est activé pendant peu de temps au lieu de l'être en permanence.

L'idée de base de l'invention consiste à introduire dans l'enceinte de confinement d'un emballage dans laquelle se produisent la radiolyse et/ou la thermolyse une boîte dont au moins une des faces est équipée d'un filtre sélectif du mélange pour laisser passer les gaz inflammables et notamment l'hydrogène. Le produit actif de piégeage de l'hydrogène est placé dans la boîte et est donc isolé des poisons gazeux par le filtre. Le contenu de la boîte est idéalement formé des gaz inflammables purs si la filtration est parfaite. Le filtre a la double fonction d'arrêter ou de ralentir certains au moins des autres gaz du mélange, et notamment d'arrêter le monoxyde de carbone qui est un poison de la réaction catalytique, et de produire un gradient de pression partielle entre l'intérieur et l'extérieur de la boîte, puisque les gaz inflammables sont piégés à mesure qu'ils pénètrent dans la boîte. On obtient donc un système où l'hydrogène présent dans l'enceinte de confinement est conduit dans la boîte par le gradient de pression partielle à mesure qu'il se forme d'une part, et qu'il est piégé d'autre part, alors que les gaz poisons ne pénètrent pas ou très difficilement dans la boîte. La « boîte » est également appelée « enveloppe » dans la suite de la description.

Un aspect de l'invention est donc un dispositif de piégeage de gaz inflammables et notamment de l'hydrogène (et ses formes isotopiques, à savoir les formes deutériées, tritiées ou encore mixtes, deutériées et tritiées) produits par radiolyse et/ou thermolyse dans une enceinte de confinement formée dans un système de transport et/ou d'entreposage de matières radioactives (ce système pouvant être un emballage de déchets, un conteneur de combustible irradié, ou autre), le dispositif comportant une enveloppe délimitant une cavité dans laquelle se situent des moyens actifs aptes à piéger les gaz inflammables, l'enveloppe étant continue hormis à au moins une ouverture qui est occupée par un filtre et communiquant exclusivement avec l'enceinte de confinement, le filtre laissant passer les gaz inflammables, caractérisé en ce que le filtre ralentit ou arrête d'autres gaz et notamment arrête le monoxyde de carbone.

Les moyens actifs peuvent être constitués d'un hydrure ou d'un oxyde métallique ; ils peuvent être à un état divisé et libre dans l'enveloppe, ou disposés en revêtement de surface de plaques internes à l'enveloppe, ce qui garantit que les moyens actifs sont bien accessibles, permettant notamment leur remplacement lorsqu'ils sont saturés, contrairement aux dispositifs où ils sont enrobés dans des matrices.

Le filtre peut être constitué d'une couche microporeuse, la filtration se faisant alors selon un processus d'exclusion stérique, celui-ci inhibant ou retardant la diffusion des molécules de taille importante et favorisant la diffusion des molécules de taille les plus faibles. Les gaz inflammables comportant des molécules de taille moins importante que celle des gaz poisons, la diffusion de ces derniers dans la couche microporeuse est alors sensiblement retardée, voire arrêtée, alors que celle des gaz inflammables est, au contraire, favorisée.

Le filtre peut être complété par une membrane métallique située sous le filtre principal et qui le complète ; la filtration par la membrane laisse passer les gaz inflammables seulement et arrête tous les autres gaz grâce au mode chimique de la filtration. Celle-ci est alors réalisée selon un processus d'absorption des gaz inflammables sur la surface de la membrane, dissociation, diffusion à travers la membrane, recombinaison et désorption. Après avoir traversé toute l'épaisseur de la membrane métallique, les gaz inflammables se retrouvent ainsi au sein de l'enveloppe.

Le filtre garde toute son utilité puisqu'il arrête certains gaz pouvant empêcher par empoisonnement le bon fonctionnement de la membrane métallique, dont, encore, le monoxyde de carbone.

Les filtres comprennent souvent un substrat poreux sans propriétés de filtration particulière mais assurant leur résistance mécanique.

La couche microporeuse peut être constituée de silice, la membrane métallique pouvant être en palladium, palladium-nickel, palladium-argent, palladium-cuivre, ou encore vanadium-tungstène et vanadium-nickel.

Si la sélectivité du filtre est jugée insuffisante, l'enveloppe peut encore contenir des produits de piégeage de certains poisons des moyens actifs, comme du carbonate.

L'invention sera maintenant décrite à titre purement illustratif en liaison aux figures suivantes :
- la figure 1 est une vue générale d'une réalisation de l'invention,
- la figure 2 représente une autre réalisation de l'invention,
- les figures 3, 4 et 5 illustrent deux façons particulières d'agencer l'invention,
- et la figure 6 illustre le filtre.

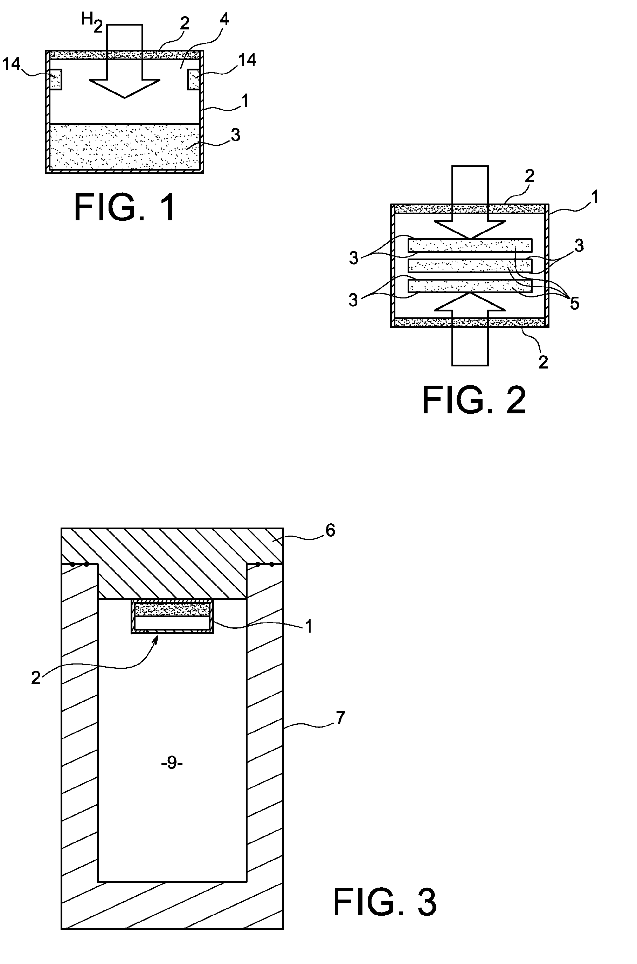

L'invention (figure 1) se présente sous forme d'une boîte délimitée par une enveloppe (1) comprenant au moins une ouverture, chaque ouverture étant obturée par un filtre (2). L'enveloppe (1) contient des moyens actifs (3) de piégeage de l'hydrogène, et un volume inoccupé (4) donnant sur le filtre (2). La boîte est typiquement placée dans une enceinte de confinement dont le contenu, non représenté sur les figures, est soumis à une radiolyse ou une thermolyse qui produit constamment de l'hydrogène mais également des gaz poisons néfastes au bon fonctionnement des moyens actifs, tels que CO, HC1 ou encore HF. Les moyens actifs peuvent être des hydrures métalliques tels que le ZrCO ou encore le Zr2Fe, ou des oxydes métalliques. Ils peuvent être, entre autres dispositions, à un état libre et divisé au fond de la boîte ou, comme on le représente à la figure 2, en revêtement de plaques (5) séparées suspendues à l'intérieur de l'enveloppe (1). Dans cette réalisation, l'enveloppe (1) comprend une ouverture double et donc une paire de filtres (2) les obturant.

La boîte peut être placée à un endroit quelconque, par exemple (figure 3) dans l'enceinte de confinement (9) d'un emballage (7) en forme de conteneur clos par un couvercle (6) supérieur : elle peut notamment être accrochée sous le couvercle (6), le filtre (2) donnant sur le volume interne de l'enceinte de confinement (9) au sommet de celui-ci : l'hydrogène se formant tend à s'élever et à se diriger vers la boîte, où il est capté.

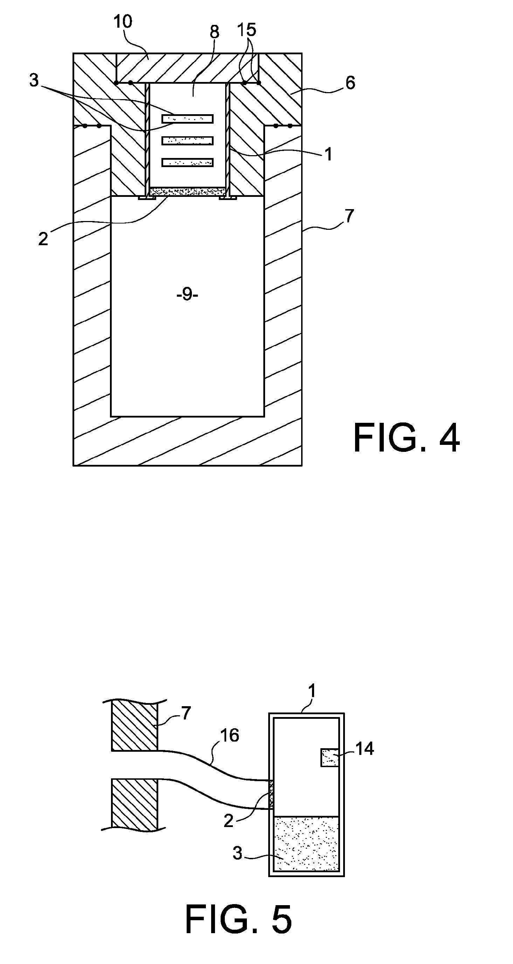

D'autres dispositions sont cependant concevables sans changer la nature de l'invention, comme celle que l'on représente à la figure 4, où la boîte est placée dans le couvercle (6) de l'emballage (7) ; la boîte (8), contenant les moyens actifs (3), donne alors sur l'intérieur de l'emballage (7), par l'intermédiaire du filtre (2), et sur l'extérieur par l'intermédiaire d'un petit couvercle (10) continu, rendu étanche par un joint (15), mais qui peut être retiré pour remplacer les moyens actifs (3). Une autre possibilité, représentée à la figure 5, consisterait à placer la boîte hors de l'emballage (7 ) en reliant l'intérieur de la boîte et celui de l'emballage par un conduit (16) ; le conduit (16) et l'ouverture de l'enveloppe (1) coïncident, de sorte que le filtre (2) obture aussi le conduit (16).

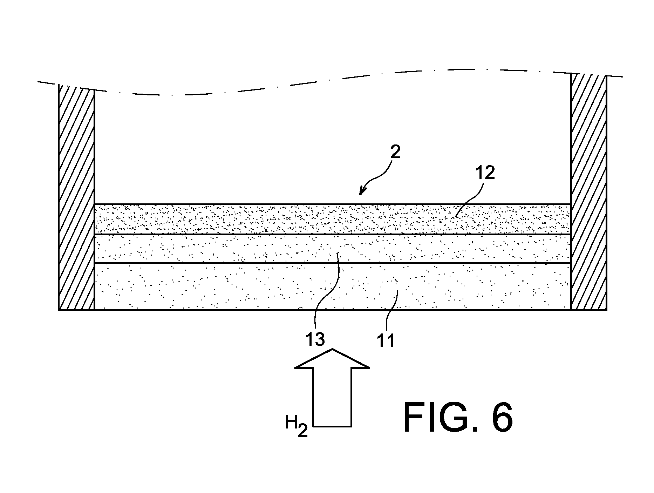

On va maintenant passer à la description du filtre (2). Il comprend, en allant de l'extérieur vers l'intérieur de la boîte et comme le montre la figure 6, typiquement un substrat poreux (11) assurant sa rigidité et pouvant être un fritté métallique ou réalisé en céramique, une couche microporeuse (13) permettant d'arrêter certains poisons et une membrane métallique de filtration (12) des gaz inflammables, la couche microporeuse (13) se situant alors entre la membrane métallique (12) et le substrat (11), qui est le plus à l'extérieur du filtre (2). La membrane métallique (12) peut être, entre autres, à base de palladium qui a la faculté de réaliser la filtration de l'hydrogène par la voie chimique selon le processus décrit précédemment. L'hydrogène traverse alors la membrane métallique (12) selon ce processus. D'autres alliages métalliques, dont certains ont déjà été mentionnés, possèdent des propriétés semblables de filtration.

La couche microporeuse (13) est destinée à protéger le palladium, ou plus généralement la matière de la membrane métallique (12), en arrêtant ou ralentissant les gaz pouvant l'empoisonner comme le CO ; elle peut être réalisée en silice. Le filtre composite tel que décrit combinant membrane métallique et couche microporeuse peut être réalisé par un dépôt de palladium sur une couche en silice, l'ensemble étant supporté par le substrat poreux.

Selon un second mode de réalisation, le filtre (2) est constitué d'un substrat poreux et d'une couche microporeuse (13), qui travaille par filtration purement moléculaire selon le processus d'exclusion stérique décrit précédemment. La couche microporeuse peut toutefois être perméable à certains gaz ou molécules de faibles dimensions, tels que des gaz poisons, comme HCl. Ces gaz peuvent alors entrer dans l'enveloppe (1) et gêner le bon fonctionnement des moyens actifs (3). Des pièges supplémentaires (14) peuvent être ajoutés à l'intérieur de l'enveloppe (1) pour fixer ces gaz ; on peut toutefois, dans certaines circonstances, choisir de les placer à l'extérieur de l'enveloppe. Un matériau de piégeage intéressant, à l'égard des gaz mentionnés ci-dessus, sont les carbonates. Des dessicants peuvent aussi être ajoutés dans l'enveloppe (1).

## Revendications

1. Dispositif de piégeage de gaz inflammables produits par radiolyse et/ou thermolyse dans une enceinte de confinement formée dans un système (7) de transport et/ou d'entreposage de matières radioactives, le dispositif comportant une enveloppe (1) délimitant une cavité dans laquelle se situent des moyens actifs (3) aptes à piéger les gaz inflammables, l'enveloppe étant continue hormis à au moins une ouverture qui est occupée par un filtre et communiquant exclusivement avec l'enceinte de confinement, le filtre (2) laissant passer les gaz inflammables, **caractérisé en ce que** le filtre ralentit ou arrête d'autres gaz et arrête le monoxyde de carbone.

2. Dispositif de piégeage de gaz selon la revendication 1, **caractérisé en ce qu'**il comprend, dans l'enveloppe, et placée sur l'ouverture, une membrane métallique (12) réalisant une filtration laissant passer seulement les gaz inflammables et placée entre ledit filtre et les moyens actifs.

3. Dispositif de piégeage de gaz selon la revendication 1, **caractérisé en ce qu'**il comprend, dans l'enveloppe, des pièges (14) pour fixer des gaz à molécules de faibles dimensions ayant traversé le filtre (2).

4. Dispositif de piégeage de gaz selon la revendication 3, **caractérisé en ce que** les pièges sont constitués de carbonate.

5. Dispositif de piégeage de gaz selon l'une quelconque des revendications 1 à 4, **caractérisé en ce que** le filtre est constitué par une couche microporeuse (13).

6. Dispositif de piégeage de gaz selon la revendication 5, **caractérisé en ce que** la couche microporeuse (13) est constituée de silice.

7. Dispositif de piégeage de gaz selon l'une quelconque des revendications 1 à 6, **caractérisé en ce que** le filtre comprend un substrat poreux (11).

8. Dispositif de piégeage de gaz selon l'une quelconque des revendications 1 à 7, **caractérisé en ce que** les moyens actifs sont constitués d'un hydrure ou d'un oxyde métallique.

9. Dispositif de piégeage de gaz selon l'une quelconque des revendications 1 à 8, **caractérisé en ce que** les moyens actifs sont à un état divisé et libre dans l'enveloppe.

10. Dispositif de piégeage de gaz selon l'une quelconque des revendications 1 à 8, **caractérisé en ce que** les moyens actifs sont disposés en revêtement de surfaces de plaques (5) internes à l'enveloppe.

## Patentansprüche

1. Vorrichtung zum Auffangen von brennbaren Gasen, die durch Radiolyse und/oder Thermolyse in einem Sicherheitsbehälter entstehen, der in einem System (7) zum Transportieren und/oder Zwischenlagern von radioaktiven Stoffen ausgebildet ist, wobei die Vorrichtung eine Hülle (1) aufweist, die einen Hohlraum begrenzt, in welchem sich Wirkmittel (3) befinden, die dazu geeignet sind, die brennbaren Gase aufzufangen, wobei die Hülle durchgehend ausgebildet ist mit Ausnahme von zumindest einer Öffnung, die von einem Filter eingenommen wird und ausschließlich mit dem Sicherheitsbehälter kommuniziert, wobei das Filter (2) die brennbaren Gase durchlässt, **dadurch gekennzeichnet, dass** das Filter weitere Gase abbremst bzw. aufhält und Kohlenmonoxid aufhält.

2. Vorrichtung zum Auffangen von Gasen nach Anspruch 1, **dadurch gekennzeichnet, dass** sie in der Hülle und an der Öffnung angeordnet eine metallische Membran (12) aufweist, die eine Filterung durchführt, wobei nur die brennbaren Gase durchgelassen werden, und die zwischen Filter und Wirkmittel angeordnet ist.

3. Vorrichtung zum Auffangen von Gasen nach Anspruch 1, **dadurch gekennzeichnet, dass** sie in der Hülle Fallen (14) aufweist, um Gase mit klein bemessenen Molekülen zu fixieren, welche das Filter (2) durchströmt haben.

4. Vorrichtung zum Auffangen von Gasen nach Anspruch 3, **dadurch gekennzeichnet, dass** die Fallen aus Carbonat bestehen.

5. Vorrichtung zum Auffangen von Gasen nach einem der Ansprüche 1 bis 4, **dadurch gekennzeichnet, dass** das Filter aus einer mikroporösen Schicht (13) besteht.

6. Vorrichtung zum Auffangen von Gasen nach Anspruch 5, **dadurch gekennzeichnet, dass** die mikroporöse Schicht (13) aus Kieselsäure besteht.

7. Vorrichtung zum Auffangen von Gasen nach einem der Ansprüche 1 bis 6, **dadurch gekennzeichnet, dass** das Filter ein poröses Substrat (11) enthält.

8. Vorrichtung zum Auffangen von Gasen nach einem der Ansprüche 1 bis 7, **dadurch gekennzeichnet, dass** die Wirkmittel aus einem Hydrid oder einem Metalloxid bestehen.

9. Vorrichtung zum Auffangen von Gasen nach einem der Ansprüche 1 bis 8, **dadurch gekennzeichnet, dass** die Wirkmittel in der Hülle in einem geteilten und freien Zustand vorliegen.

10. Vorrichtung zum Auffangen von Gasen nach einem der Ansprüche 1 bis 8, **dadurch gekennzeichnet, dass** die Wirkmittel als Oberflächenüberzug von innerhalb der Hülle befindlichen Platten (5) angeordnet sind.

## Claims

1. Device for trapping flammable gases produced by radiolysis and/or thermolysis in a containment formed in a system (7) for transporting and/or storing radioactive materials, the device comprising a casing (1) delimiting a cavity in which are situated active means (3) able to trap the flammable gases, the casing being continuous except for at least one opening which is occupied by a filter and communicating exclusively with the containment, the filter (2) allowing the flammable gases to pass through, **characterised in that** the filter slows down or stops other gases and stops carbon monoxide.

2. Device for trapping gases according to claim 1, **characterised in that** it comprises, in the casing, and placed on the opening, a metal membrane (12) carrying out a filtration that only allows flammable gases to pass through and placed between said filter and the active means.

3. Device for trapping gases according to claim 1, **characterised in that** it comprises, in the casing, traps (14) to fix gases with molecules of small dimensions having passed through the filter (2).

4. Device for trapping gases according to claim 3, **characterised in that** the traps are constituted of carbonate.

5. Device for trapping gases according to any of claims 1 to 4, **characterised in that** the filter is constituted of a microporous layer (13).

6. Device for trapping gases according to claim 5, **characterised in that** the microporous layer (13) is constituted of silica.

7. Device for trapping gases according to any of claims 1 to 6, **characterised in that** the filter comprises a porous substrate (11).

8. Device for trapping gases according to any of claims 1 to 7, **characterised in that** the active means are constituted of a metal hydride or oxide.

9. Device for trapping gases according to any of claims 1 to 8, **characterised in that** the active means are in a divided and free state in the casing.

10. Device for trapping gases according to any of claims 1 to 8, **characterised in that** the active means are arranged as surface coating of plates (5) inside the casing.
